# EUROPÄISCHE PATENTSCHRIFT

(11) **EP 0 564 833 B1**
(45) Veröffentlichungstag und Bekanntmachung des Hinweises auf die Patenterteilung: **11.09.1996**
(21) Anmeldenummer: 93103830.1
(22) Anmeldetag: 10.03.1993
(51) Int. Cl.: A61C 11/00

(54) **Verriegelungsvorrichtung für einen Artikulator**
Means for locking a dental articulator
Verrouillage pour articulateur dentaire

(30) Priorität: 05.04.1992 DE 4211301
(43) Veröffentlichungstag der Anmeldung: 13.10.1993
(73) Patentinhaber: Mack, Heinz, D-80637 München (DE)
(72) Erfinder: Mack, Heinz, D-80637 München (DE)
(74) Vertreter: Steffens, Joachim, Dr.

(56) Entgegenhaltungen:
- EP-A- 0 054 600
- DE-A- 2 922 087
- DE-A- 3 111 861
- DE-A- 3 131 689
- DE-A- 3 150 304
- DE-A- 3 424 772
- DE-B- 2 554 410
- DE-C- 2 511 388
- US-A- 4 533 323
- US-A- 4 619 611
- US-A- 4 797 097
- US-A- 4 923 398

## Beschreibung

Die vorliegende Erfindung betrifft eine Verriegelungsvorrichtung zur gesicherten drehbaren Verbindung zwischen Kugel und Kugelpfanne eines Artikulators, wobei die Kugel einen horizontal ausgerichteten Kugelhals aufweist und die Kugelpfanne auf der Kugel zum Anliegen kommt.

Ein Artikulator, bei dem die Kugel einen horizontal ausgerichteten Kugelhals aufweist und die Kugelpfanne auf der Kugel zum Anliegen kommt, ist allgemein im Stand der Technik bekannt.

Dental-Artikulatoren der verschiedensten Ausführungsformen sind bekannt. So ist beispielsweise in der eigenen deutschen Patentschrift 25 11 388 ein Dental-Artikulator beschrieben, der im wesentlichen besteht aus einem Rahmenunterteil mit der Halterungsvorrichtung für die Montageplatte für das Unterkiefermodell und einem Auflagetisch für den Schneidezahn-Führungsstift, einem mit dem Rahmenunterteil fest verbundenen Vertikalrahmenteil mit zwei als Gelenkköpfe dienenden, auf zwei Trägerzapfen befindlichen Kugeln und einem Rahmenoberteil mit den beiden radial drehbaren als Gelenkpfanne dienende, eine hintere Kugelführungseinrichtung und eine gegenüber der hinteren Kugelführungseinrichtung winkelverstellbare innere Kugelführungsvorrichtung sowie die Lagerwelle aufweisende Kugelpfanne, der Halterungsvorrichtung für die Montageplatte für das Oberkiefermodell und einem verstellbaren Schneidezahn-Führungsstift.

Als nachteilig hat sich bei derartigen Artikulatoren die Tatsache erwiesen, daß sich die Kugelpfannen des Artikulatoroberteils nicht in der Weise mit den Kugeln des Rahmenunterteils drehbar verbinden lassen, daß es beim Arbeiten mit dem Artikulator nicht zu einem unbeabsichtigten Ausrasten beider Teile kommen kann.

Aufgabe der vorliegenden Erfindung ist es daher, eine Verriegelungsvorrichtung für einen Artikulator zu schaffen, mit der eine gesicherte, drehbare Verbindung zwischen Kugel und Kugelpfanne gewährleistet ist, so daß ein unbeabsichtigtes Lösen der Verbindung zwischen Kugel und Kugelpfanne vermieden wird.

Gelöst wird diese Aufgabe durch die im kennzeichnenden Teil des Anspruchs 1 angegebenen Merkmale.

Gegenstand der Erfindung ist somit eine Verriegelungsvorrichtung zur gesicherten, drehbaren Verbindung zwischen Kugel und Kugelpfanne eines Artikulators, wobei die Kugel einen horizontal ausgerichteten Kugelhals aufweist und die Kugelpfanne auf der Kugel zum Anliegen kommt, die dadurch gekennzeichnet ist, daß an der Außenseite der Kugelpfanne, die dem Kugelhals zugewandt ist, ein halbringförmiger Ansatz angeordnet ist, und daß auf dem Kugelhals eine axial bewegbare und arretierbare Scheibe angeordnet ist, die an der der Kugel zugewandten Seite eine Ringnut aufweist, in die der halbringförmige Ansatz nach Aufschieben und Arretierung der Schiebe eingreift. Der Innenradius des halbringförmigen Ansatzes entspricht mit Spiel dem Außenradius des Kugelhalses. Bevorzugte Ausführungsformen sind aus den Unteransprüchen ersichtlich.

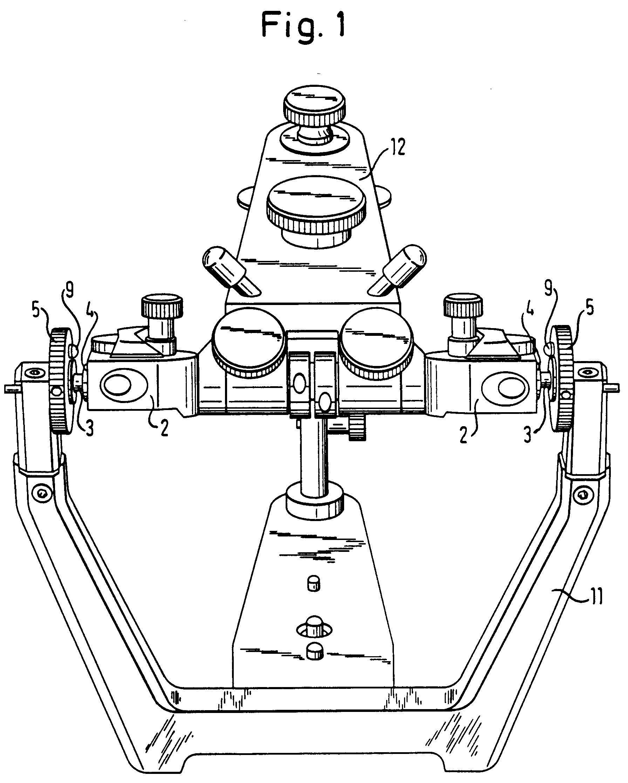

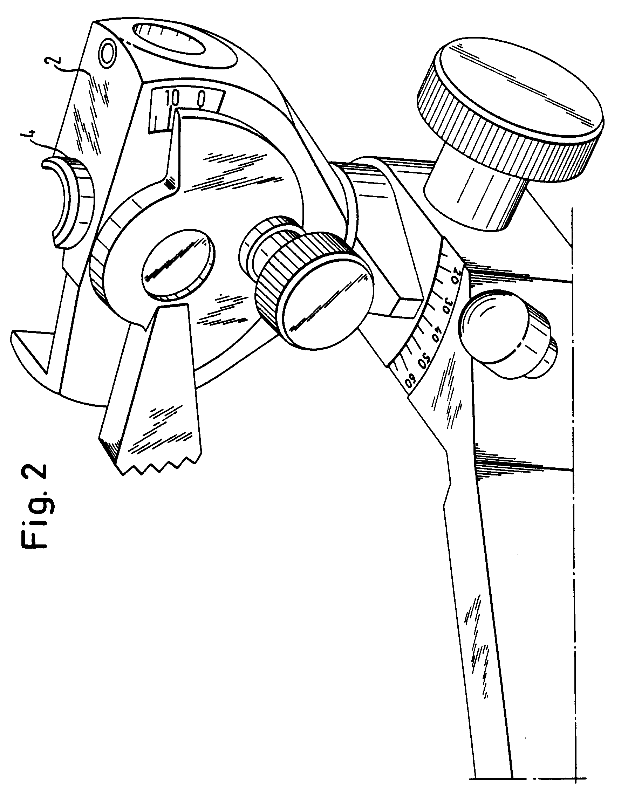

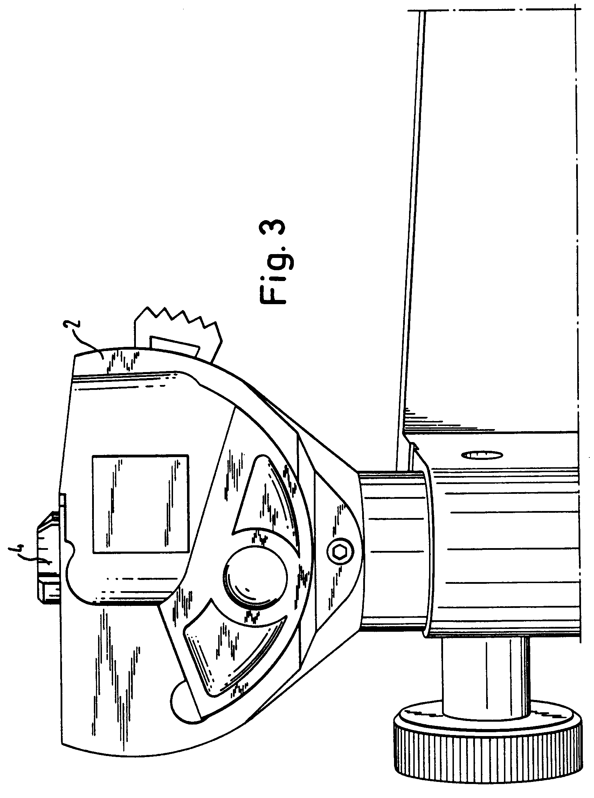

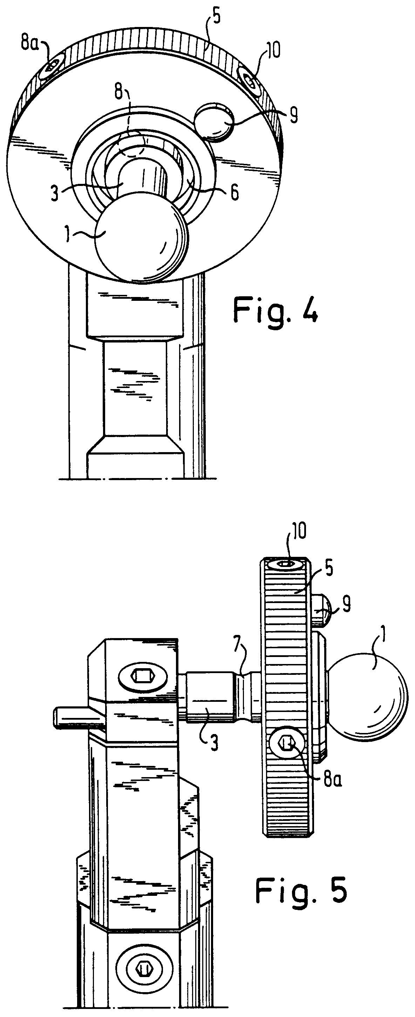

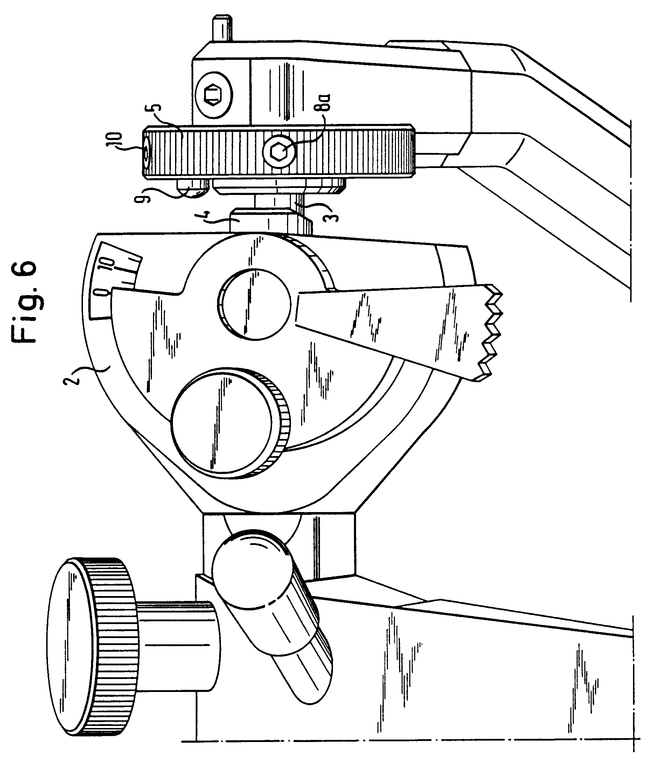

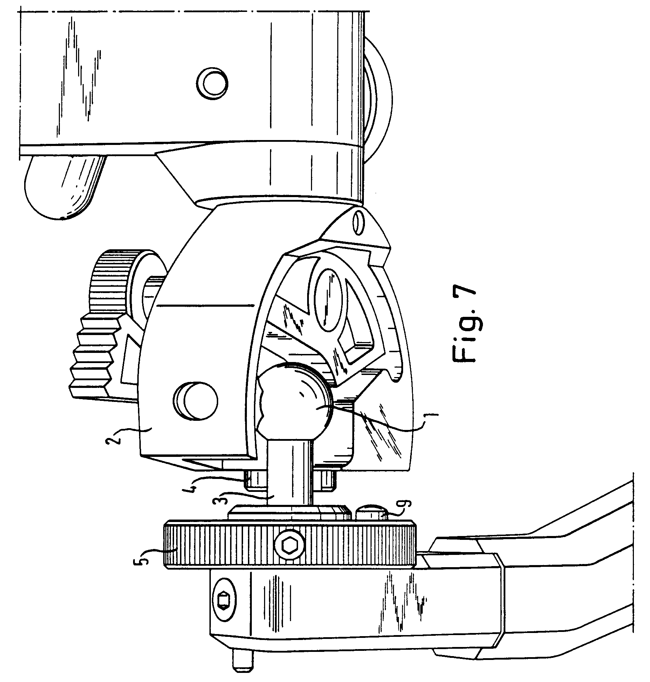

Die vorliegende Erfindung wird weiterhin anhand der Fig. 1 bis 8 erläutert, die eine bevorzugte Ausführungsform darstellen, so daß die Erfindung nicht darauf beschränkt ist. Alle aus den Figuren ersichtlichen Einzelheiten gehören zur erfindungswesentlichen Offenbarung, selbst wenn in der Beschreibung nicht ausdrücklich auf diese Einzelheiten hingewiesen wurde.

In den Figuren haben die Bezugszeichen folgende Bedeutung:
- 1: Kugel
- 2: Kugelpfanne
- 3: Kugelhals
- 4: halbringförmiger Ansatz
- 5: Scheibe
- 6: Ringnut
- 7: ringförmige Kugelhalsvertiefung
- 8: durch Federkraft beaufschlagte Kugel
- 8a: Feststellschraube
- 9: einstellbarer Bolzen
- 10: Arretierschraube für Bolzen 9
- 11: Artikulatorunterteil
- 12: Artikulatoroberteil

Fig. 1 zeigt den Artikulator in seiner gesamten Einheit, wobei man an der Kugelpfanne 2 den halbringförmigen Absatz 4 erkennt. Die Scheibe 5 befindet sich in entarretiertem Zustand. Das Unterteil des Artikulators ist mit 11 und das Oberteil des Artikulators mit 12 bezeichnet. Am Artikulatorunterteil 11 befindet sich in horizontaler Anordnung links und rechts der Kugelhals 3, der die Kugel 1 trägt. Auf den beiden Kugeln lagern die Kugelpfannen 2.

Fig. 2 zeigt in deutlicher Darstellung die Kugelpfanne 2 mit dem halbringförmigen Ansatz 4.

Fig. 3 zeigt aus einer anderen Perspektive die Innenseite des an der Kugelpfanne 2 befindlichen halbringförmigen Ansatzes 4.

Fig. 4 zeigt den horizontal angeordneten Kugelhals 3 mit der Kugel 1. Auf dem Kugelhals befindet sich verschiebbar angeordnet die Scheibe 5 mit der Ringnut 6. Der Bolzen 9 ist mittels der Arretierschraube 10 einstellbar.

Fig. 5 zeigt in horizontaler Anordnung den Kugelhals 3 mit der Kugel 1 und der ringförmigen Kugelhalsvertiefung, in die eine in der Scheibe 5 befindliche, mit Federkraft beaufschlagte Kugel 8 eingreift. Die Federkraft läßt sich mittels der Feststellschraube 8a variieren. Der Bolzen 9 wird durch die Schraube 10 in der gewünschten Stellung gehalten.

Fig. 6 zeigt, wie die Kugelpfanne auf der nicht dargestellten Kugel 1 ruht. Man erkennt deutlich den an der Kugelpfanne 2 befindlichen halbringförmigen Ansatz 4, der in die Ringnut der Scheibe 5 eingreift. Fig. 6 zeigt die nicht arretierte Position.

Fig. 7 zeigt aus einer anderen Perspektive, wie die Kugelpfanne 2 auf der Kugel 1 aufliegt. Außerdem erkennt man deutlich, wie der halbringförmige Ansatz 4 auf dem Kugelhals zum Anliegen kommt. Auch hier befindet sich die Scheibe 5 in einem entarretierten Zustand. Durch Bewegung der Scheibe 5 nach rechts greift der halbringförmige Ansatz 4 in die Ringnut 6 der Scheibe 5 ein.

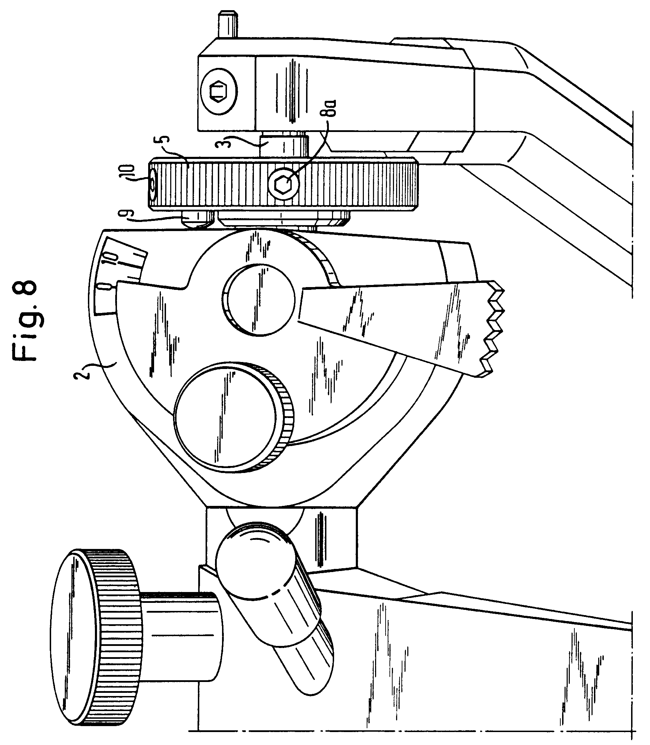

Fig. 8 zeigt den verriegelten Zustand, wobei der halbringförmige Ansatz 4 in die Ringnut 6 der Scheibe 5 eingreift. Außerdem kommt in dieser dargestellten Position der Bolzen 9 zum Anliegen an der Kugelpfanne 2. Damit ist das gewollte freie transversale Spiel begrenzt bzw. ganz aufgehoben. Das gewollte freie transversale Spiel erhält man, wenn man die Scheibe 5 dreht, so daß der Bolzen 9 nicht an der Kugelpfanne 2 anliegt. In dieser verriegelten Form ist eine gesicherte, drehbare Verbindung von Kugel und Kugelpfanne gewährleistet, wodurch eine einwandfreie Rotation bzw. Scharnierfunktion des Artikulatoroberteils gegeben ist.

## Patentansprüche

1. Verriegelungsvorrichtung zur gesicherten drehbaren Verbindung zwischen Kugel (1) und Kugelpfanne (2) eines Artikulators, wobei die Kugel (1) einen horizontal ausgerichteten Kugelhals (3) aufweist und die Kugelpfanne auf der Kugel (1) zum Anliegen kommt,
**dadurch gekennzeichnet,** daß
(a) an der Außenseite der Kugelpfanne (2), die dem Kugelhals (3) zugewandt ist, ein halbringförmiger Ansatz (4) angeordnet ist, und
(b) auf dem Kugelhals (3) eine axial bewegbare und arretierbare Scheibe (5) angeordnet ist, die an der der Kugel (1) zugewandten Seite eine Ringnut (6) aufweist, in die der halbringförmige Ansatz (4) nach Aufschieben und Arretierung der Scheibe eingreift.

2. Verriegelungsvorrichtung nach Anspruch 1,
**dadurch gekennzeichnet,** daß
zur Arretierung der Scheibe (5) auf dem Kugelhals (3) eine senkrecht zur Kugelhalsachse verlaufende ringförmige Kugelhalsvertiefung (7) angeordnet ist, in die zwecks Arretierung der Scheibe (5) eine in der Scheibe (5) bebefindliche, durch Federkraft beaufschlagte Kugel (8) eingreift.

3. Verriegelungsvorrichtung nach Anspruch 1,
**dadurch gekennzeichnet,** daß
sowohl zur axialen Verschiebung als auch Arretierung der Scheibe (5) sowohl die Scheibe (5) als auch der Kugelhals (3) sich entsprechende Gewinde aufweisen.

4. Verriegelungsvorrichtung nach einem oder mehreren der Ansprüche 1 bis 3,
**dadurch gekennzeichnet,** daß
sich auf der der Kugelpfanne (2) zugewandten Seite der Scheibe (5) ein einstellbarer Bolzen (9) befindet, der das vorgegebene freie transversale Spiel begrenzt oder aufhebt.

## Claims

1. A locking device adapted to provide a secure swivel connection between the ball (1) and the ball socket (2) of an articulator, the ball (1) having an horizontally aligned ball neck (3) and the ball socket being rested on the ball, characterized in that:
(a) on the outer side of the ball socket (2) which is turned towards the ball neck (3) a semi-annular ledge (4) is arranged and
(b) on the ball neck (3) an axially movable and lockable disk (5) is arranged, which on the side turned towards the ball (1) has an annular groove (6), into which the semi-annular ledge (4) resiliently fits in the locked condition.

2. The locking device as claimed in claim 1, characterized in that for locking the disk (5) on the ball neck (3) an annular is provided extending perpendicular to the axis of the ball neck and into which a spring-loaded ball (8), which is arranged in the disk (5), fits in the for the purpose of locking the disk (5).

3. The locking device as claimed in claim 1, characterized in that both for axial displacement and also for locking of the disk (5) both the disk (5) and also the ball neck (3) have corresponding screw threads.

4. The locking device as claimed in any one or more of the claims 1 through 3, characterized by an adjustable bolt (9) on the side of the disk (5) facing the ball socket (5), said bolt limiting or taking up the predetermined free transverse play.

## Revendications

1. Dispositif de verrouillage pour la liaison de rotation, bloquée entre la rotule (1) et la coupelle à rotule (2) d'un articulateur, la rotule (1) ayant un col (3) aligné horizontalement et la coupelle à rotule venant en appui sur la rotule (1),
caractérisé en ce que
a) sur la face extérieure de la coupelle (2) tournée vers le col (3) de la rotule, il est prévu un prolongement (4) en forme de demi-couronne et
b) le col (3) de la rotule porte un disque (5) mobile axialement et susceptible d'être bloqué, qui comporte une rainure annulaire (6) du côté tourne vers la rotule (1) dans laquelle vient prendre le prolongement (4) en forme de demi-couronne après emmanchement et blocage du disque.

2. Dispositif de verrouillage selon la revendication 1, caractérisé en ce que
pour bloquer le disque (5), il est prévu une gorge annulaire (7) dans le col, cette gorge étant perpendiculaire à l'axe du col de la rotule pour bloquer le disque (5) sur le col (3), cette gorge recevant une bille (8) poussée par la force d'un ressort, dans le disque (5), pour bloquer le disque (5).

3. Dispositif de verrouillage selon la revendication 1, caractérisé en ce que
le disque (5) de même que le col de rotule (3) comportent des filetages correspondants pour le mouvement axial et le blocage du disque (5).

4. Dispositif de verrouillage selon l'une ou plusieurs des revendications 1 à 3,
caractérisé en ce que
du côté du disque (5) tourné vers la coupelle à rotule (2), il est prévu un goujon réglable (9) qui limite ou supprime le jeu transversal, libre, prédéterminé.
